# EUROPEAN PATENT APPLICATION

(11) **EP 1 566 921 A1**
(43) Date of publication of application: **24.08.2005**
(21) Application number: 03810364.4
(22) Date of filing: 07.11.2003
(51) Int. Cl.: H04L 12/28

(54) **A METHOD, A SYSTEM AND A TERMINAL FOR REALIZING PRESENTING INFORMATION INTERACTION OF THE WIRELESS LAN USERS**

(30) Priority: 08.11.2002 CN 02148906; 12.11.2002 CN 02148378
(71) Applicant: Huawei Technologies Co., Ltd., Guangdong 518129 (CN)
(72) Inventor: Zhang, Wenlin, Shenzhen, Guangdong 518129 (CN); LI, Zhiming, Shenzhen, Guangdong 518129 (CN)
(74) Representative: Mounteney, Simon James
(86) International application number: PCT/CN2003/000940
(87) International publication number: WO 2004/043007

(57) **Abstract**

A method for implementing presence information interaction of WLAN (Wireless Local Area Network) subscriber and the system and terminal thereof, wherein, the method comprises setting one or more than one presence information monitoring unit, detecting the presence information by the presence information monitoring unit, and transmitting this presence information to a PRESENCE service system. The system thereof comprises a presence information monitoring unit, a WLAN network and PRESENCE service system, wherein input of the presence information monitoring unit is connected with WLAN network and the output is connected with PRESENCE service system. The terminal thereof also comprises a presence information monitoring unit, which is connected with PRESENCE service system through WLAN.

## Description

### Field of the Technology

The present invention relates generally to Wireless Local Area Network (WLAN), especially to a method for implementing presence information interaction of a WLAN subscriber along with a system and a terminal thereof.

### Background of the Invention

In the mobile communication network or Internet, the subscriber's presence information in PRESENCE service is managed by the network, wherein the presence information comprises subscriber's contact way, current status, subscriber's terminal information, service and service element information etc. The subscriber, subscriber's terminal, service and service element information are called presence entity all together. PRESENCE service provides the above information for different watchers according to the predefined rules, and watchers can actively demand for a presence entity's information, or predefine to be notified as soon as the information is changed.

For instance, when a subscriber arrives at his office, he can set the presence information as cellphone shut-off, office telephone available, and Email available. When the watcher needs to contact this subscriber, he can dial the office telephone or send an Email.

Presence entity information can be set manually through terminal, or the network provides presence entity information and the terminal just sets the rules and scope of this information. For example, if the watcher needs to talk with the subscriber, he can predefine the status information of this subscriber, and he will be notified once status information of this subscriber changes into power on. For example again, when the subscriber's cellphone is changed from shut-off status to power-on status, a PRSENCE system finds subscriber's setting rules which set that this subscriber's information can be provided for watcher 1, but not for watcher 2. Then the PRSENCE system updates the information for watcher 1, while maintains the original information for watcher 2.

As the complement of mobile communication network, Wireless Local Area Network (WLAN) comprises manifold different technologies. Dividing in terms of frequency channel, the communication technology adopting 2.4GHz frequency channel includes IEEE 802.11b standard and Bluetooth Technology. The communication technology adopting 5GHz frequency channel includes IEEE 802.11a standard and ETSI BRAN Hiperlan2 standard.

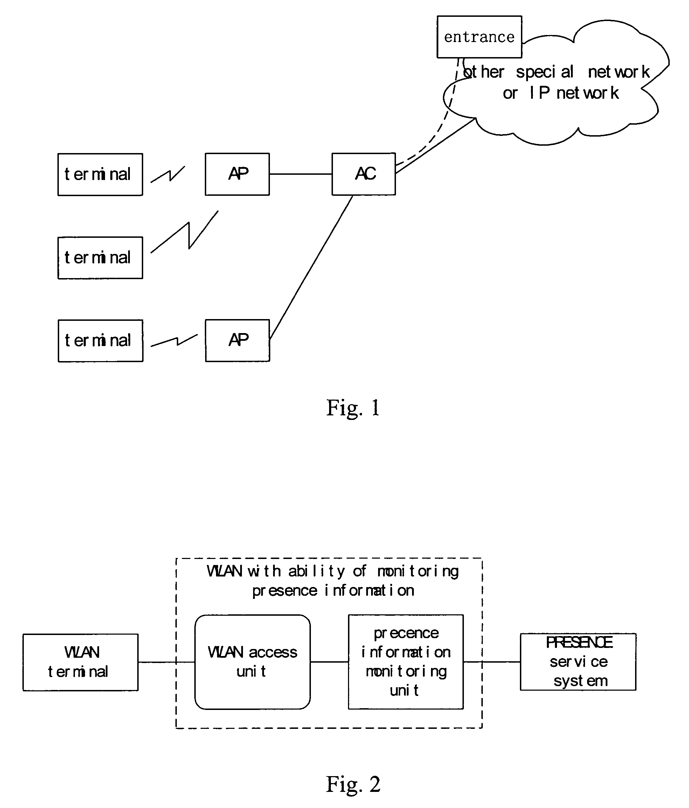

Most WLANs are used for transmitting IP (Internet Protocol) packets. With reference to figure 1, figure 1 is the connection sketch diagram of WLAN. For a wireless IP network, its basic structure is to fulfill terminal's wireless access by utilizing an Access Point (AP) unit, an Access Control (AC) unit, and IP transmission network constituted through joint of network control and connection devices. Generally, WLAN is transparent for upper hierarchy IP.

WLAN can connect and interact with many other networks, such as Internet, 3^{rd} Generation Mobile Communication (3GPP) network or other special networks. The terminals can use one or more than one kind of the connections thereof.

For those terminals in mobile communication network or Internet, the watcher can acquire the presence information through PRESENCE service system, while for those terminals in WLAN, at present there is no implementing method for providing the presence information and variation information of terminals in WLAN for PRESENCE service system automatically and real-timely. Just that, when the terminal accesses to WLAN, the terminal initiatively visits PRESENCE service system by itself to register log-in, and visits PRESENCE service system again to register log-out before leaving. So, the watcher cannot acquire the presence information, meanwhile bringing inconvenience and making information of presence entity unable to be updated in time. Manually updating information of presence entity is not provided with real-time quality and is difficult to realize.

### Summary of the Invention

One objective of the present invention is to provide a method and a system for implementing presence information interaction of WLAN subscribers, in order to inform the PRESENCE service system with subscriber's presence information, so that the watcher can acquire information of WLAN terminals. Another object of the present invention is to provide a terminal for WLAN presence information interaction, in order to inform the PRESENCE service system with subscriber's presence information.

The method for implementing presence information interaction of a WLAN (wireless local network) subscriber, comprises□
setting one or more than one presence information monitoring unit,
detecting presence information of the WLAN subscriber by the presence information monitoring unit, and
transmitting the presence information to a PRESENCE service system.

The system for implementing presence information interaction of a WLAN subscriber, comprising, a presence information monitoring unit with ability of monitoring the presence information, WLAN network entities and a PRESENCE service system, wherein input of the presence information monitoring unit thereof is connected with the WLAN network entities to monitor the presence information, output of the presence information monitoring unit thereof is connected with the PRESENCE service system to transmit the presence information.

The terminal for implementing presence information interaction of a WLAN subscriber, further comprising, a presence information monitoring unit, which is connected with a PRESENCE service system through a WLAN, for monitoring the presence information and transmitting to the WLAN side.

In the present invention, by steps of setting one or more than one presence information monitoring unit, detecting WLAN client's presence information, and transmitting presence information to PRESENCE service system, the mutual communication between WLAN and the existing PRESENCE service system is implemented. Not only providing the real-time changing situation of presence information to the watcher through PRESENCE service system, but also starting acquisition of current presence information through the inquiring request initiated by the watcher, accordingly the interaction of presence information is implemented. Thereby it provides more convenient and various services for WLAN terminal.

In the present invention, WLAN is constructed by WLAN access unit and presence information monitoring unit that is provided with ability to detect presence information and changing situation thereof, so that WLAN is of ability to monitor presence information; presence information and changing situation thereof can be reported to PRESENCE service system through this WLAN system, and this makes the service and function of WLAN more preferable and prolific.

### Brief Description of the Drawings

Figure 1 is the connection sketch diagram of the existing WLAN;
Figure 2 is the logical structure sketch diagram for implementing interaction of WLAN subscriber's presence information;
Figure 3 is the logical structure sketch diagram of embodiment 1, showing the logical structure for monitoring and transmitting WLAN subscriber's presence information in Authentication Authorization Accounting (AAA) server;
Figure 4 is the logical structure sketch diagram of embodiment 2, showing the logical structure for monitoring and transmitting WLAN subscriber's presence information by adopting independent presence information monitoring unit;
Figure 5 is the logical structure sketch diagram of embodiment 3, showing the logical structure for monitoring and transmitting WLAN subscriber's presence information in WLAN access unit;
Figure 6 is the logical structure sketch diagram when terminal with presence information monitoring function is used to implement presence information interaction;
Figure 7 is the sketch diagram of setting presence information monitoring unit in WLAN terminal;
Figure 8 is the sketch diagram when modules of presence information monitoring unit are set in different entities;
Figure 9 is the flowchart for implementing WLAN subscriber's presence information interaction based on embodiment 1;
Figure 10 is the flowchart for implementing WLAN subscriber's presence information interaction based on embodiment 1 when the watcher initiates the command;
Figure 11 is the flowchart of terminal with presence information monitoring function implementing subscriber's presence information interaction.

### Embodiments of the Invention

Now, the present invention will be described in detail with reference to the accompanying drawings.

When terminal is accessed to a WLAN or presence information changes, the presence information monitoring unit obtains the presence information and varying condition thereof, and then reports this information to the PRESENCE service system to which terminal is attached or which the current WLAN is connected to.

With reference to figure 2, figure 2 is the logical structure sketch diagram for implementing interaction of WLAN subscriber's presence information. This system comprises the WLAN access unit and the presence information monitoring unit, which are used for constructing a local network with ability of monitoring subscriber's presence information.

Wherein, the WLAN access unit is used for terminal's access and routing management, so that WLAN terminals can communicate with other networks through IP protocol; this access unit generally comprises an access point unit, an access controller unit, and can also comprise a router for network connection and a relevant server for network control.

A plurality of access techniques are available for this WLAN access unit, such as the already extensively applied IEEE802.11b industry standard at present, and other techniques in development like Bluetooth, IEEE802.11a standard and ETSI BRAN Hiperlan2, etc. Most WLAN are used for transmitting IP packets, the difference of access is transparent to upper hierarchy IP protocol.

The presence information monitoring unit is used for detecting presence information and varying condition thereof, and reporting this presence information to PRESENCE service system. The said presence information comprises: online and offline status, information of connection/disconnecting to the those networks interacting with WLAN, status change, position and time when terminal is accessed, position and time when terminal logs out, and accessing manner information, or the combination of the above any information. This presence information monitoring unit comprises the presence information collection module and the presence information sending module, wherein input of the presence information collection module is connected to the access control unit of WLAN, in order to acquire the presence information; output of the presence information collection module is connected to input of the presence information sending module which transmits the presence information from the presence information collection module to outside units, such as PRESENCE service system.

The technological scheme for implementing the present invention will be described in details with reference to specific embodiments. The said presence information monitoring unit can exist as an independent entity, or can be distributed in different entities. In practical WLAN network, WLAN is connected to the 3GPP Packet Switched Domain, or to Internet; the system for implementing WLAN subscriber presence information interaction comprises the WLAN access unit and the presence information monitoring unit, and further comprises the Authentication Authorization Accounting (AAA) server that is used for authentication authorization and accounting.

### Embodiment1:

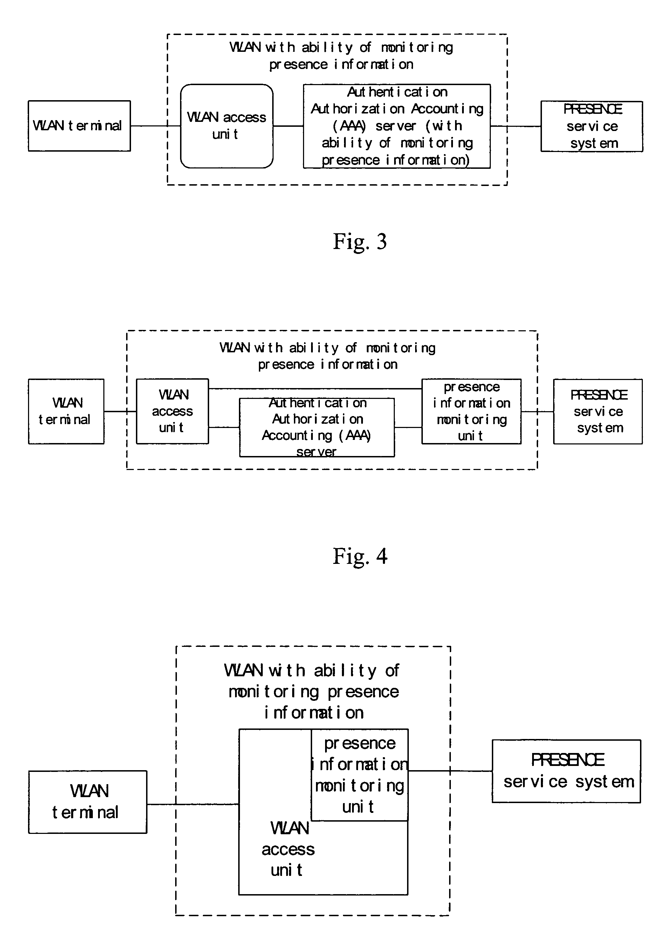

With reference to figure 3, figure 3 is the logical structure sketch diagram of embodiment 1 for monitoring and transmitting subscriber's presence information in the AAA server. The presence information monitoring unit can be set inside the AAA server, so that this server is of function to monitor and send connection information to outside PRESENCE service system, and is connected to the PRESENCE service system.

### Embodiment 2:

With reference to figure 4, figure 4 is the logical structure sketch diagram of embodiment 2 for monitoring and transmitting subscriber's presence information. The presence information monitoring unit is an independent entity, which is located between the AAA server and the PRESENCE service system, and the AAA server is connected to the WLAN access unit; or else, presence information monitoring unit is directly connected to WLAN access unit.

### Embodiment 3:

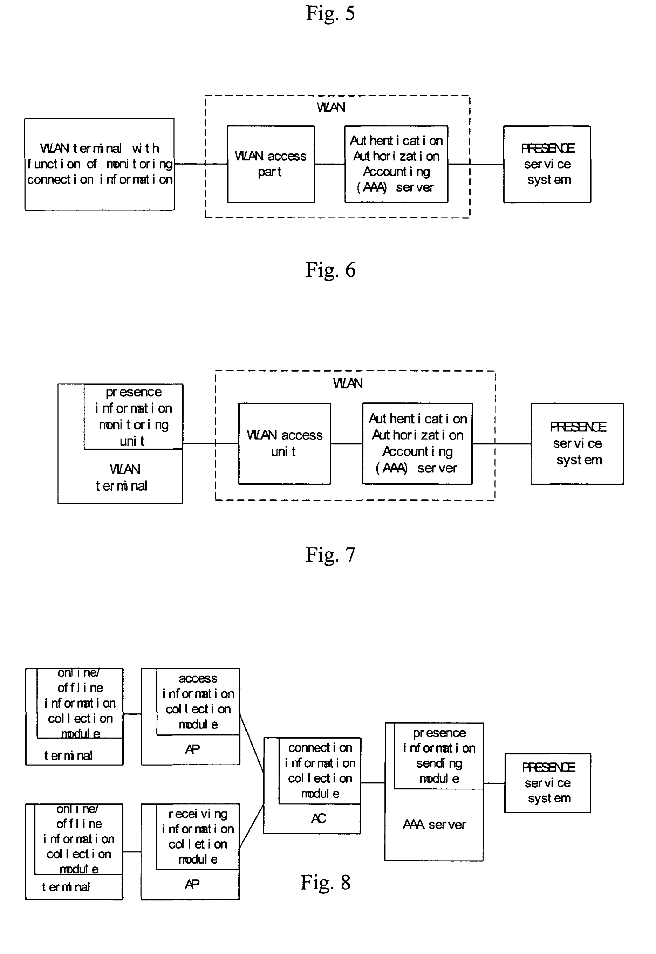

With reference to figure 5, figure 5 is the logical structure sketch diagram of embodiment 3 for monitoring and transmitting subscriber's presence information. The presence information monitoring unit is set in the WLAN access unit and is connected to the PRESENCE service system.

The said embodiment 1, embodiment 2 and embodiment 3 all implement the objective of the present invention by adding the presence information monitoring unit at WLAN side. The present invention can also implement the object of the present invention by adding the presence information monitoring unit at terminal side.

### Embodiment 4:

With reference to figure 6, figure 6 is the logical structure sketch diagram when terminal with presence information monitoring function is used to implement presence information interaction of WLAN subscriber. WLAN comprises the WLAN access unit and even the AAA server, wherein the WLAN access unit is connected to the AAA server and the AAA server is connected to the PRESENCE service system, and the terminal with presence information monitoring function is accessed to WLAN through the WLAN access unit.

With reference to figure 7, the presence information monitoring unit is set in the WLAN terminal so that terminal is of ability to monitor presence information. In the presence information monitoring unit, output of the presence information collection module is connected with input of the presence information sending module, wherein output of the said presence information sending module is connected with the said WLAN access unit.

After the terminal collects its own presence information such as offline or online status and service authorization, the presence information will be registered to PRESENCE service system when the terminal is online; if terminal actively log out or the network requires off-line, the PRESENCE service system will be notified to update status record just before the terminal logs out; if the terminal is forced to log out because of power-off etc, the record in PRESENCE service system is unable to be updated in time, under this circumstance, before reporting the presence information, the server needs to determine whether the terminal is connected, in order to avoid this situation: the server judges the terminal as offline because it finds the terminal unable to be connected, thereby this leads to ignorance of all terminal's information.

As for the position information in presence information, this terminal can real-timely detect and acquire the local access point address, by interacting with position service network device, to convert AP address into position information. Or, the terminal collects its own position information through GPS (Global Position System), and then real-timely updates position information, which is input to server or stored in terminal, and no response until a position information require arrives.

In each embodiment above, the presence information collection module and the presence information sending module of presence information monitoring unit can also be set flexibly in various entities. With reference to figure 8, figure 8 is the sketch diagram when modules of presence information monitoring unit are respectively set in different entities. Online/offline collection module is set in terminal and is connected to access point unit of the WLAN access unit; the access information collection module is set in the access point unit and is connected to the access controller unit; connection information collection module is set in the access point controller unit and is connected to the AAA server; the presence information sending module is set in the AAA server and connected to the PRESENCE service system. Online/offline information collection module collects information including online position, and/or online time and/or online status, and/or offline indicating information, and the collected information is transmitted to the presence information sending module in the AAA server through the access point unit and access point controller unit in sequence; the access information collection module collects information including access position and/or access time, and this collected information is transmitted to the presence information sending module in AAA server through the access point controller unit; the connection information collection module collects information of connection/disconnection to those networks interacting with WLAN, and the collected information is sent to the presence information sending module in the AAA server; the presence information sending module transmits the information to the PRESENCE service system. In this embodiment, the modules are relatively independent, fulfilling their functions respectively, enhancing functions of some entities in WLAN such as the access point unit, the access point controller unit, the AAA server, and so on.

In each embodiment above, the principles for implementing presence information interaction are basically same. Namely, when the terminal is authenticated, logging in the network or logging out the network, or when the terminal gains authorization or is excluded from some service's connection authorization, or when relevant information of the terminal accessing to WLAN is changed, i.e. when presence information, such as alteration of online status and offline status, log-in position and time and log-out position and time, is changed, the presence information monitoring unit will detect this presence information, directly implement monitoring function and then transmit the detected presence information to the PRESENCE service system.

Detailed description will be given with reference to flowcharts.

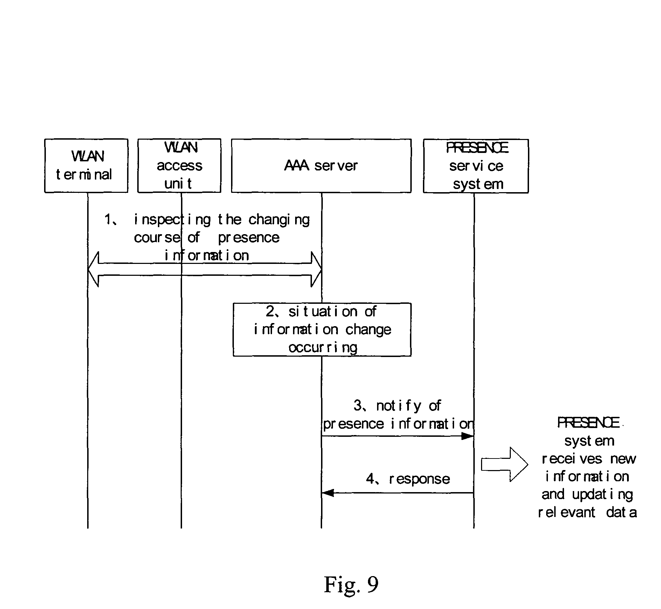

As is shown in figure 9, figure 9 is the flowchart for monitoring and transmitting presence information monitoring based on embodiment 1. Steps are as follows.

The first step, when status of terminal connecting to WLAN is changed, for instance, terminal just logging in WLAN, terminal logging out WLAN, the connection between terminal and 3GPP Packet Switched Domain passing authentication or being cancelled authorization, or terminal obtaining Internet connection authorization or this connection being cancelled, above changes of presence information will be transmitted to AAA server in WLAN through the WLAN access unit;
the second step, the presence information monitoring unit in the AAA server detects changes in the first step, and then starts to inform the PRESENCE service system of current presence information;
the third step, the AAA server sends notification of presence information changes to the PRESENCE service system;
the fourth step, the PRESENCE service system receives presence information, updates relevant data, returns to the AAA server a confirming message which indicates that presence information is already updated in the PRESENCE service system.

After presence information is updated in the PRESENCE service system, it can be provided for watchers, thereby interaction of WLAN presence information is implemented. The PRESENCE service system and the terminal may belong to same network, or to different networks respectively.

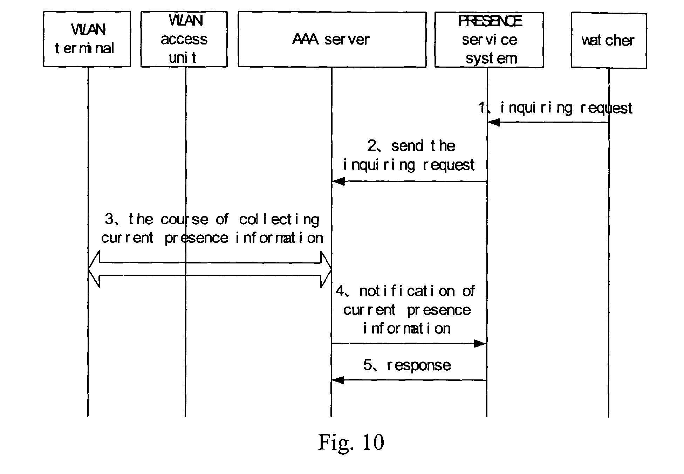

With reference to figure 10, figure 10 is another flowchart for monitoring and transmitting presence information based on the logical structure of embodiment 1, showing the steps of watcher's collecting presence information through PRESENCE service system. Specifically, steps are as follows.

The first step, when needing to obtain presence information, the watcher sends an inquiring request to the PRESENCE service system;
the second step, the PRESENCE service system sends this request to the AAA server, and the AAA server starts the inside presence information monitoring unit thereof to acquire presence information;
the third step, collecting presence information is executed;
the fourth step, the AAA server sends notification of presence information to the PRESENCE service system;
the fifth step, the PRESENCE service system receives presence information, and returns confirming message to the AAA server.

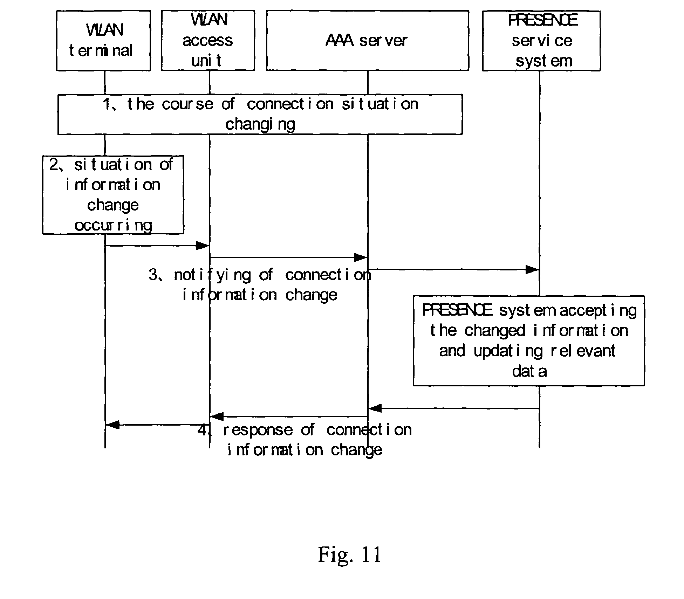

With reference to figure 11, figure 11 is the flowchart of terminal with presence information monitoring function when presence information interaction is implemented. The steps are as follows.

The first step, the terminal is accessed to WLAN and presence information is changed, for example, terminal just logging in WLAN, terminal logging out WLAN, the connection between terminal and 3GPP Packet Switched Domain passing authentication or authorization being cancelled, or terminal obtaining Internet connection authorization or this connection being cancelled;
the second step, after presence information changes are collected by the presence information monitoring unit in terminal, the presence information monitoring unit starts to a processing procedure for notify the PRESENCE service system to update this presence information;
the third step, the WLAN terminal bearing presence information monitoring unit sends notification of presence information or presence information changes to the PRESENCE service system through the WLAN access unit and the AAA server;
the fourth step, after receiving the presence information and updating relevant data, the PRESENCE service system returns a response message through the AAA server and the WLAN access unit, in order to indicate that presence information has already been updated inside PRESENCE service system.

After the presence information is updated inside PRESENCE service system, the presence information can be provided for the watcher, thereby interaction of WLAN subscriber's presence information is implemented. The PRESENCE service system and the terminal may belong to same network, or to different networks respectively.

Further more, at an interval PRESENCE service system can detect whether the connection is availability, in order to guarantee information validity. In addition, when the presence information is required, in order to guarantee information real-time quality and reliability, the PRESENCE service system can send an inquiring message to the terminal through an established connection, and the terminal will return confirming information of this message.

## Claims

1. A method for implementing presence information interaction of a WLAN (wireless local network) subscriber, comprising:
setting one or more than one presence information monitoring unit,
detecting presence information of the WLAN subscriber by the presence information monitoring unit, and
transmitting the presence information to a PRESENCE service system.

2. The method according to claim 1, comprising:
A) detecting the presence information real-timely;
B) after the detected presence information changes, transmitting current presence information by the presence information monitoring unit.

3. The method according to claim 1, comprising:
A) after having received a request from a watcher, the PRESENCE service system starting up the presence information monitoring unit to acquire the presence information;
B) after acquiring the presence information, presence information monitoring unit transmitting the presence information.

4. The method according to claims 1, 2, or 3, wherein the presence information monitoring unit is set at WLAN network side.

5. The method according to claims 1, 2, or 3, wherein the presence information monitoring unit is set inside a terminal.

6. The method according to claim 5, further comprising:
after accessing to a WLAN, the WLAN subscriber establishing connection to the PRESENCE service system;
transmitting the presence information to the PRESENCE service system through the WLAN;
at an interval the PRESENCE service system confirming whether the established connection exists.

7. The method according to claim 5, further comprising,
after accessing to a WLAN, the WLAN subscriber establishing connection to the PRESENCE service system;
the PRESENCE service system sending an inquiring request for the presence information to the WLAN subscriber through the established connection, and the WLAN subscriber returning a confirming information of this request;
the said presence information being transmitted to PRESENCE service system through the WLAN.

8. The method according to claim 1, further comprising, the PRESENCE service system receiving the presence information, updating the presence information data in the PRESENCE service system, and then returning a confirmation to the presence information monitoring unit.

9. The method according to claim 1, wherein the presence information comprises online position or time information, or, offline position or time information, or information of connection/disconnection to those networks interacting with a WLAN, or current access position information, or current access time information, or current log-out position information, or access authentication range information and access service authorization information, or current log-out time information, or, the combination of the above information or information changes.

10. A system for implementing presence information interaction of a WLAN subscriber, comprising, a presence information monitoring unit with ability of monitoring the presence information, WLAN network entities and a PRESENCE service system, wherein input of the presence information monitoring unit thereof is connected with the WLAN network entities to monitor the presence information, output of the presence information monitoring unit thereof is connected with the PRESENCE service system to transmit the presence information.

11. The system according to claim 10, wherein the WLAN network entities comprises a WLAN access unit.

12. The system according to claim 11, wherein the presence information monitoring unit comprises, a presence information collection module for collecting the presence information, as well as a presence information sending module for transmitting the presence information, wherein,
input of the presence information collection module is connected with the WLAN access unit through which the presence information is collected, and output of the presence information collection module is connected with input of the presence information sending module, and
output of the presence information sending module is connected with the PRESENCE service system to transmit the presence information to the PRESENCE service system.

13. The system according to claim 12, wherein the presence information collection module at least comprising□
an online/offline information collection module, for collecting online/offline position information or time information or online/offline status information or combination of the above information;
an access information collection module, for collecting access position information and/or access time information;
a connection information collection module, for collecting information of being connection or disconnection to networks interacting with WLAN; wherein
the online/offline information collection module, the access information collection module, the connection information collection module along with the presence information sending module are a function module that is inside the WLAN network entities; or is arbitrary combination of the above plural function modules that are respectively inside WLAN network entities and/or terminal.

14. The system according to claim 11, wherein the presence information monitoring unit is inside the WLAN access unit.

15. The system according to claim 11, wherein the WLAN network entities further comprises an Authentication Authorization Accounting (AAA) server.

16. The system according to claim 15, wherein the presence information monitoring unit is in the Authentication Authorization Accounting (AAA) server, and the Authentication Authorization Accounting (AAA) server is connected to both the WLAN access unit and PRESENCE service system.

17. The system according to claim 15, wherein the Authentication Authorization Accounting (AAA) server is connected between the WLAN access unit and the presence information monitoring unit.

18. A terminal for implementing presence information interaction of a WLAN subscriber, further comprising, a presence information monitoring unit, which is connected with a PRESENCE service system through a WLAN, for monitoring the presence information and transmitting to the WLAN side.

19. The terminal according to claim 18, wherein the presence information monitoring unit at least compromises, a presence information collection module for collecting the presence information, as well as a presence information sending module for transmitting the presence information, wherein,
input of the presence information collection module is connected to a WLAN access unit to acquire the presence information by interacting with a WLAN access unit; output of the presence information collection module is connected to input of the presence information sending module, and
output of the presence information sending module is connected with the WLAN access unit, transmitting the said presence information to the PRESENCE service system through the WLAN access unit.

20. The terminal according to claim 19, wherein the presence information collection module at least compromises:
an online/offline information collection module, for collecting online position information and/or time information and/or online status information as well as offline indicating information;
an access information collection module, for collecting access position information and/or access time information;
a connection information collection module, for collecting information of connection or disconnection to networks interacting with the WLAN.
